# EUROPÄISCHE PATENTSCHRIFT

(11) **EP 0 664 920 B1**
(45) Veröffentlichungstag und Bekanntmachung des Hinweises auf die Patenterteilung: **02.04.1997**
(21) Anmeldenummer: 93921897.0
(22) Anmeldetag: 30.09.1993
(51) Int. Cl.: G21C 3/356

(54) **Gitterförmiger Abstandhalter für ein Kernreaktorbrennelement**
Grid-Shaped Spacer for Nuclear Reactor Fuel Element
Grille d'espacement d'assemblage combustible de réacteur nucléaire

(30) Priorität: 13.10.1992 EP 92117489
(43) Veröffentlichungstag der Anmeldung: 02.08.1995
(73) Patentinhaber: SIEMENS AKTIENGESELLSCHAFT, 80333 München (DE)
(72) Erfinder: BÜTTNER, Martin-Benno, D-91336 Heroldsbach (DE); PORZELT, Otto, D-91074 Herzogenaurach (DE); BLOCK, Bernd, D-91054 Erlangen (DE); BLAVIUS, Dirk, D-91325 Adelsdorf (DE)
(86) Internationale Anmeldenummer: EP9302683
(87) Internationale Veröffentlichungsnummer: WO9409495

(56) Entgegenhaltungen:
- EP-A- 0 027 203
- EP-A- 0 436 116
- EP-A- 0 452 706
- FR-A- 2 366 669

## Beschreibung

Die Erfindung betrifft einen gitterförmigen Abstandhalter mit Blechstegen, die Maschen für Brennstäbe eines Kernreaktorbrennelements bilden, und mit einer in einer Masche befindlichen langgestreckten und um eine Richtung quer zur eigenen Längsrichtung gewölbten Feder, die an jedem von zwei Federenden mit einer Lasche quer durch ein in einem Blechsteg befindliches Stegfenster hindurchgreift, das zwei beabstandete, sich gegenüber befindliche und einem Strecken der Feder entgegenstehende Fensterkanten aufweist.

Ein derartiger Abstandhalter ist aus der DE-A- 26 44 297 bekannt. Zwei langgestreckte Blattfedern dieses Abstandhalters haben die Lasche an einem Federende an der einen Längskante der Blattfeder und die Lasche am anderen Federende an der anderen Längskante dieser Blattfeder. Das Stegfenster ist durch Querblech zweigeteilt. Befindet sich eine erste Blattfeder auf der einen Seite des Blechstegs, so durchgreift jede ihrer beiden Laschen einen anderen Teil des Stegfensters im Blechsteg und liegt flach an der anderen Seite des Blechstegs an. Auf dieser anderen Seite befindet sich die zweite Blattfeder, die ebenfalls mit jeder ihrer beiden Laschen jeweils durch einen anderen Teil des Stegfensters im Blechsteg hindurchgreift. Auf der Seite des Blechstegs mit der ersten Blattfeder befinden sich diese Laschen der zweiten Blattfeder jeweils an der anderen Längskante der ersten Blattfeder, an der diese erste Blattfeder an dem betreffenden Federende keine Lasche hat, und liegen dort flach am Blechsteg an. Auf diese Weise verankern sich die beiden Blattfedern gegenseitig fest am Blechsteg.

Der Erfindung liegt die Aufgabe zugrunde, eine langgestreckte Feder an den Blechstegen des gitterförmigen Abstandhalters auf einer Seite eines solchen Blechstegs fest zu verankern, ohne daß hierzu eine zweite Feder auf der anderen Seite des betreffenden Blechstegs erforderlich ist.

Zur Lösung dieser Aufgabe ist ein gitterförmiger Abstandhalter der eingangs erwähnten Art erfindungsgemäß dadurch gekennzeichnet, daß mindestens eine Lasche in eine Kerbe in einer dem Strecken der Feder entgegenstehenden Fensterkante eingerastet ist.

In der Kerbe in der dem Strecken der langgestreckten Feder entgegenstehenden Fensterkante ist die Lasche an einem Federende besonders fest eingerastet, wenn die Feder mechanisch vorgespannt ist. Diese Vorspannung wird noch erhöht, wenn sich in der Masche des gitterförmigen Abstandhalters mit der Feder ein Brennstab befindet, an dem die Feder mit Vorspannung flach anliegt und der von der Feder gegen Noppen an anderen Blechstegen des gitterförmigen Abstandhalters gepreßt wird. Die Kerbe kann nur so tief ausgeführt sein, daß die langgestreckte Feder in der Einrastposition mechanisch vorgespannt ist.

Patentanspruch 2 ist auf eine vorteilhafte Weiterbildung gerichtet, durch die sich die mechanische Vorspannung der Feder automatisch ergibt, wenn die Lasche am Federende in Einrastposition gebracht wird. Die Anstiegshöhe der schiefen Ebene und gegebenenfalls die Tiefe der Kerbe bestimmen die mechanische Vorspannung der langgestreckten Feder in der Einrastposition.

Mit der Weiterbildung nach Patentanspruch 3 wird Unverlierbarkeit der Feder auch dann erzielt, wenn diese durchbrechen sollte.

Die Weiterbildung nach Patentanspruch 4 verbessert diese Unverlierbarkeit.

Die Weiterbildung nach Patentanspruch 5 sichert die Blattfeder gegen Schiefstellen.

Patentanspruch 6 ist auf eine weitere Ausführung gerichtet.

Die Erfindung und ihre Vorteile seien anhand der Zeichnung an einem Ausführungsbeispiel näher erläutert:
Figur 1 zeigt in perspektivischer Darstellung einen Steg eines gitterförmigen Abstandhalters mit zugehöriger Blattfeder.
Figur 2 zeigt in Draufsicht eine Masche eines gitterförmigen Abstandhalters mit dem Steg nach Figur 1;
Figur 3 zeigt in Seitenansicht eine andere Ausführungsform eines Blechstegs für einen gitterförmigen Abstandhalter mit einer Blattfeder in Ausgangsposition.
Figur 4 zeigt vergrößert den Blechsteg entsprechend Figur 3 mit der Blattfeder in Einrastposition.

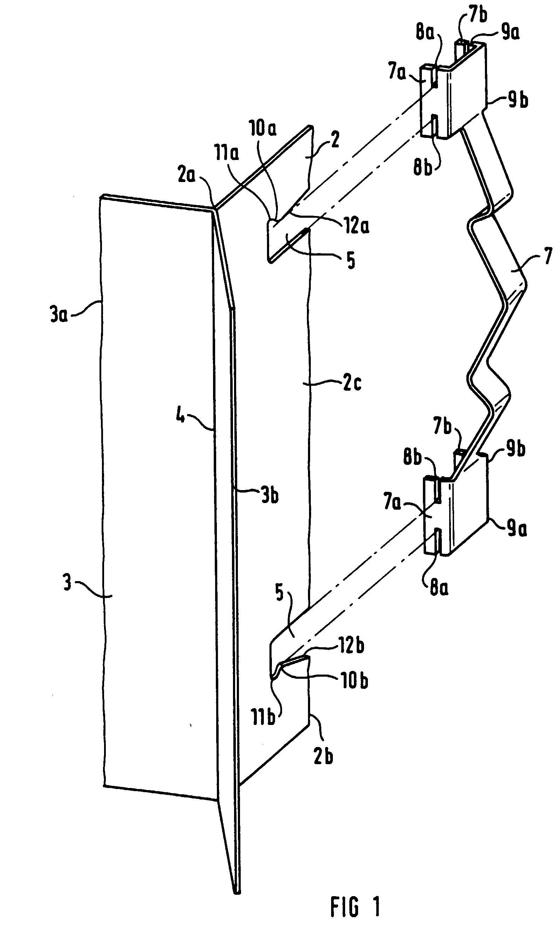

In Figur 1 sind ein erster Blechsteg 2 und ein zweiter Blechsteg 3 erkennbar. Der zweite Blechsteg 3 bildet eine Biegekante 4, die von beiden zur Biegekante 4 parallelen Seitenkanten 3a und 3b dieses zweiten Blechstegs 3 gleichen Abstand hat. Auf seiner einen Seite bildet der zweite Blechsteg 3 in bezug auf die Biegekante 4 einen Winkel von 120°, auf der anderen Seite einen Winkel von 240°. Auf dieser anderen Seite ist der erste Blechsteg 2 an der Biegekante 4 mit einer ersten Seitenkante 2a festgeschweißt. Seine zweite Seitenkante 2b hat von der ersten Seitenkante 2a und damit von der Biegekante 4 gleichen Abstand wie die Seitenkanten 3a und 3b des zweiten Blechstegs 3 von der Biegekante 4.

Von der zweiten Seitenkante 2b des ersten Blechstegs 2 geht ein Stegfenster 5 aus, das durch ein Führungsblech 2c, das seitlich neben einer Blattfeder 7 am Stegfenster 5 angeordnet ist, in zwei Teile geteilt ist.

Die dem ersten Blechsteg 2 mit dem Stegfenster 5 zugeordnete Blattfeder 7 ist langgestreckt und quer zur eigenen Längsrichtung weg vom ersten Blechsteg 2 gewölbt.

An jedem Federende weist die Blattfeder 7 an beiden Längskanten eine Lasche 7a und eine Zusatzlasche 7b auf, die sich gegenüber befinden. An beiden zum ersten Blechsteg 2 rechtwinkligen Kanten der Laschen 7a und Zusatzlaschen 7b ist jeweils eine Kerbe 8a und 8b bzw. 9a und 9b (zum Teil nicht sichtbar) vorgesehen.

Im Stegfenster 5 bildet der erste Blechsteg 2 zwei sich gegenüber befindliche Fensterkanten 10a und 10b quer zur zweiten Seitenkante 2b des ersten Blechstegs 2. Diese beiden Fensterkanten 10a und 10b sind jede in einem anderen Teil des Stegfensters 5 angeordnet und stehen dem Strecken der Blattfeder 7 entgegen. Diese Fensterkanten sind zueinander spiegelbildlich gleich, und jede Fensterkante 10a und 10b bildet eine schiefe Ebene, die ausgehend von der zweiten Seitenkante 2b des ersten Blechstegs 2 zu einer Kerbe lla bzw. llb hin in der betreffenden Fensterkante ansteigt.

An einem Federende der Blattfeder 7 werden Lasche 7a und Zusatzlasche 7b in den einen Teil des Stegfensters 5 und am anderen Federende Lasche 7a und Zusatzlasche 7b in den anderen Teil des Stegfensters 5 ausgehend von der zweiten Seitenkante 2b hineingeschoben. Während das Führungsblech 2c in die sich gegenüberliegenden, Führungskerben darstellenden Kerben 8b und 9b der Laschen 7a und Zusatzlaschen 7b an beiden Federenden der Blattfeder 7 eingreift, greifen die Fensterkanten 10a und 10b in die anderen Kerben 8a und 9a an diesen Laschen 7a und Zusatzlaschen 7b ein.

Sind die Federenden bis zum seitlichen Anschlag in das Stegfenster 5 hineingeschoben, rasten die Laschen 7a an den Federenden in die Kerben lla bzw. llb der Fensterkanten 10a und 10b ein. Da die Blattfeder 7 wegen der durch die Fensterkanten 10a und 10b gebildeten schiefen Ebenen längs ihrer Längsrichtung zusammengedrückt und damit mechanisch vorgespannt wird, preßt die Blattfeder 7 ihre Federenden gegen die dem Strecken der Blattfeder 7 entgegenstehenden Fensterkanten 10a und 10b, so daß die Blattfeder 7 mit ihren Federenden im Stegfenster 5 fest verrastet ist.

Während die Laschen 7a in den Kerben lla und llb der Fensterkanten 10a und 10b des Stegfensters 5 eingerastet sind und dort an den Fensterkanten 10a und 10b anliegen, liegen die Zusatzlaschen 7b an den Stellen 12a und 12b der von den Fensterkanten 10a bzw. 10b gebildeten schiefen Ebenen an, so daß die Blattfeder 7 nicht kippen kann.

Bei Federbruch an der Blattfeder 7 werden die beiden Federenden formschlüssig und unverlierbar im Stegfenster 5 festgehalten.

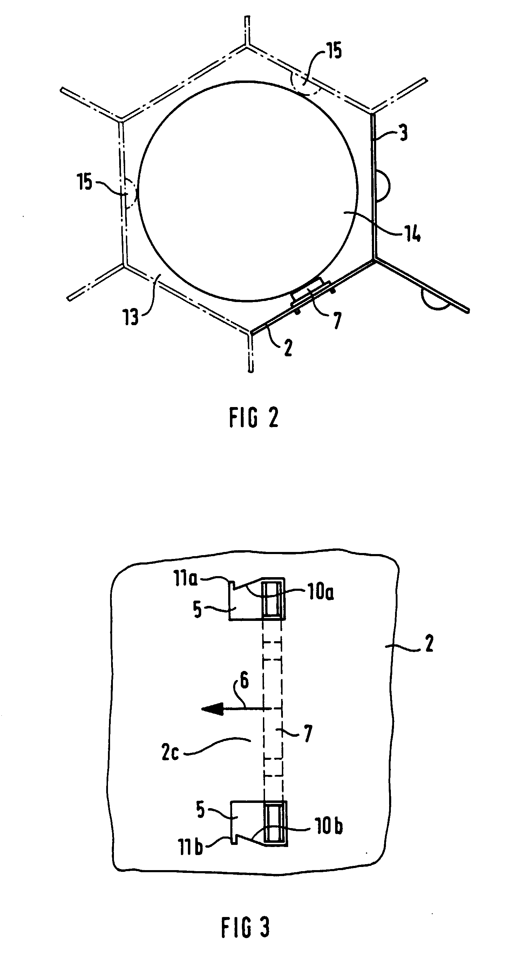

Wie Figur 2 zeigt, sind in einem gitterförmigen Abstandhalter aus erstem Blechsteg 2 und zweitem Blechsteg 3 gebildete Einheiten entsprechend Figur 1 unter Ausbildung von Maschen 13 mit ein regelmäßiges Sechseck darstellender Maschenkontur zusammengesetzt und jeweils an Seitenkanten 2b, 3a bzw. 3b miteinander verschweißt. Eine Masche 13 kann von einem Brennstab 14 durchgriffen sein, an dem die Blattfeder 7 des Blechstegs 2 flach anliegt und diesen Brennstab 14 gegen starre Noppen 15 an anderen Blechstegen preßt.

In Figur 3 ist ein Blechsteg 2 zu erkennen, der ein Stegfenster 5 aufweist. Das Stegfenster 5 ist durch das seitlich zur Blattfeder 7 angeordnete Führungsblech 2c in zwei Teile geteilt. Beide Teile des Stegfensters 5 haben an der einen Seite eine Stelle, an der die Laschen 7a und die Zusatzlaschen 7b eingesetzt werden können, ohne daß die Fensterkanten der beiden Teile des Stegfensters 5 in die Kerben 8a und 9a und das Führungsblech 2c in die Führungskerben darstellenden Kerben 8b und 9b greifen. Durch Verschieben der Blattfeder 7 in die Einrastposition in Richtung des Pfeils 6 quer zu ihrer Längsrichtung auf die andere Seite der beiden Teile des Stegfensters 5 wird die Blattfeder 7 durch Stauchen mechanisch vorgespannt und verrastet schließlich wie die Blattfeder 7 nach Figur 1 in den Kerben lla und llb in den dem Strecken der Blattfeder 7 entgegenstehenden Fensterkanten 10a und 10b.

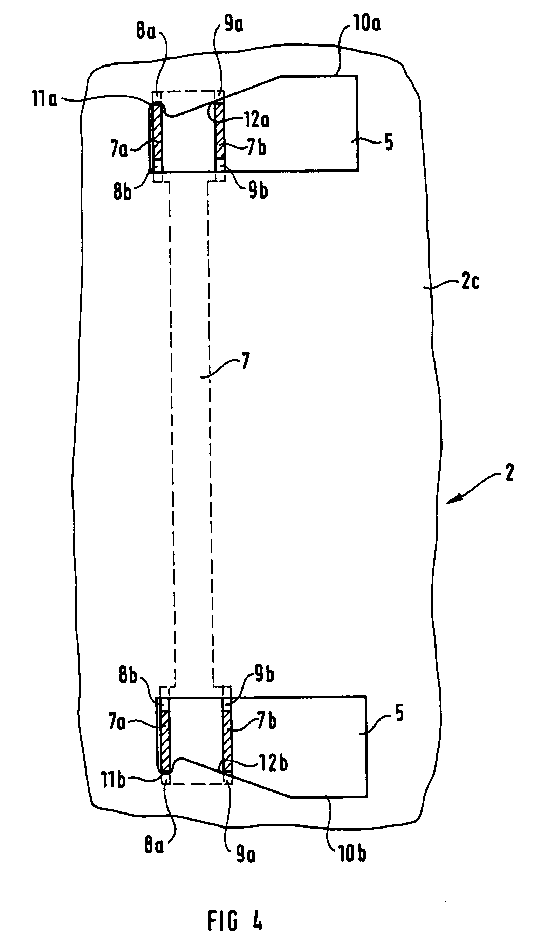

In Figur 4, in der gleiche Teile mit den gleichen Bezugszeichen wie in Figur 3 versehen sind, ist deutlich zu erkennen, daß in der Einrastposition der Blattfeder 7 die Zusatzlasche 7b an einem Federende der Blattfeder 7 an der Stelle 12a der schiefen Ebene anliegt, die die Fensterkante 10a des einen Teils des Stegfensters 5 bildet. Das gleiche gilt für das andere Federende entsprechend, wenn die Fensterkante 10b des anderen Teils des Stegfensters 5 für dieses andere Federende spiegelbildlich zur Fensterkante 10a ausgebildet ist und die Zusatzlasche 7b an der Stelle 12b der schiefen Ebene der Fensterkante 10b anliegt. Auf diese Weise ist sichergestellt, daß die Blattfeder 7 in den Stegfenstern 5 und 6 nicht kippen kann.

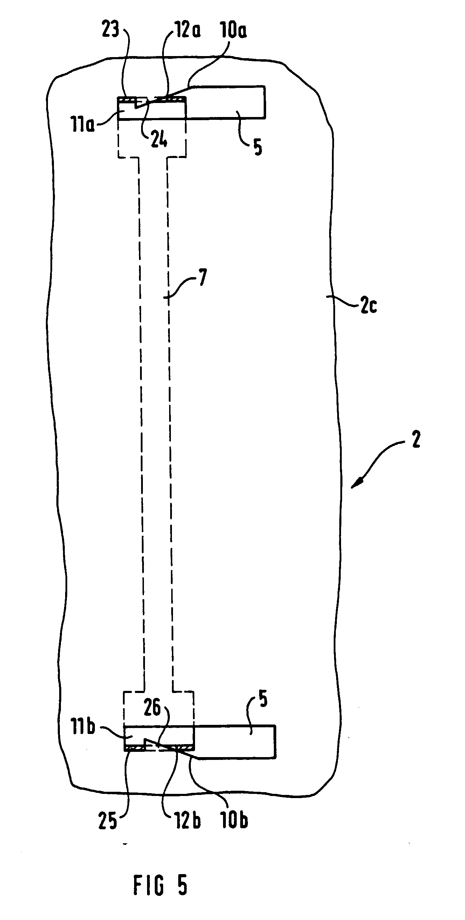

Die Abwandlung nach Figur 5, in der gleiche Teile mit den gleichen Bezugszeichen wie in den Figuren 3 und 4 versehen sind, besteht darin, daß an beiden Federenden der Blattfeder 7 jeweils eine Lasche als eine am ,betreffenden Federende der Blattfeder 7 angeformte Öse 23 bzw. 25 ausgebildet ist, die jeweils durch ein anderes Teil des Stegfensters 5 hindurchgreift. Diese Ösen 23 und 25 haben jede eine Durchführung 24 bzw. 26, die die einem Strecken der Blattfeder 7 entgegenstehende Fensterkante 10a bzw. 10b an der schiefen Ebene durchgreift. Jede als Öse 23 bzw, 25 ausgebildete Lasche liegt sowohl in der Kerbe lla bzw. llb als auch an der schiefen Ebene in den Punkten 12a bzw. 12b an den Fensterkanten 10a bzw. 10b an, wodurch ein Kippen der Blattfeder 7 ausgeschlossen ist.

## Patentansprüche

1. Gitterförmiger Abstandhalter mit Blechstegen, die Maschen für Brennstäbe eines Kernreaktorbrennelements bilden, und mit einer in einer Masche befindlichen langgestreckten und um eine Richtung quer zur eigenen Längsrichtung gewölbten Feder, die an jedem von zwei Federenden mit einer Lasche durch ein in einem Blechsteg befindliches Stegfenster hindurchgreift, das zwei beabstandete, sich gegenüber befindliche und einem Strecken der Feder entgegenstehende Fensterkanten aufweist, **dadurch gekennzeichnet**, daß mindestens die Lasche (7a, 23) an einem der beiden Federenden in eine Kerbe (11a) in einer dem Strecken der Feder (7) entgegenstehenden Fensterkante (10a) eingerastet ist.

2. Gitterförmiger Abstandhalter nach Anspruch 1,
**dadurch gekennzeichnet**, daß die dem Strecken der Feder (7) entgegenstehende Fensterkante (10a) eine zur Kerbe (11a) hin ansteigende schiefe Ebene bildet.

3. Gitterförmiger Abstandhalter nach einem der Ansprüche 1 oder 2,
**dadurch gekennzeichnet**, daß an jedem Federende der Feder (7) die Lasche (7a) an der gleichen Längskante der Blattfeder (7) angebracht ist, daß diese Laschen (7a) an einander zugewandten Kanten eine Führungskerbe (8b) aufweisen und daß in jede dieser Führungskerben (8b) ein Führungsblech (2c) greift, das seitlich zur Feder (7) am Stegfenster (5) angeordnet ist.

4. Gitterförmiger Abstandhalter nach Anspruch 3,
**dadurch gekennzeichnet**, daß der Lasche (7a) an jedem Federende eine Zusatzlasche (7b) an der anderen Längskante der Feder (7) zugeordnet ist, die quer durch das Stegfenster (5) hindurchgreift und ebenfalls eine Führungskerbe (9b) aufweist, in die das Führungsblech (2c) greift, und
daß jede Lasche (7a) und die ihr zugeordnete Zusatzlasche (7b) jeweils mit einer weiteren Kerbe (8a) bzw. (9a) versehen sind, in die dieselbe dem Strecken der Feder (7) entgegenstehende Fensterkante (10a) bzw. (10b) eingreift.

5. Gitterförmiger Abstandhalter nach Anspruch 4,
**dadurch gekennzeichnet**, daß an jedem Federende sowohl die Lasche (7a) als auch die zugeordnete Zusatzlasche (7b) an derselben dem Strecken der Feder (7) entgegenstehenden Fensterkante (10a) bzw. (10b) anliegen.

6. Gitterförmiger Abstandhalter nach Anspruch 1 und 2,
**dadurch gekennzeichnet,** daß die dem Strecken der Feder (7) entgegenstehende Fensterkante (10a) die Lasche (13) durchgreift.

## Claims

1. Grid-shaped spacer with sheet-metal webs which form meshes for fuel rods of a nuclear-reactor fuel element, and with an elongate spring which is located in a mesh and is curved about a direction transverse to its own longitudinal direction and which, at each of two spring ends, engages with a tab through a web aperture which is located in a sheet-metal web and which has two spaced mutually opposite aperture edges opposing an elongation of the spring, characterized in that at least the tab (7a, 23) at one of the two spring ends is snapped into a notch (11a) in an aperture edge (10a) opposing the elongation of the spring (7).

2. Grid-shaped spacer according to Claim 1, characterized in that the aperture edge (10a) opposing the elongation of the spring (7) forms an inclined plane ascending towards the notch (11a).

3. Grid-shaped spacer according to one of Claims 1 or 2, characterized in that, at each spring end of the spring (7), the tab (7a) is attached to the same longitudinal edge of the leaf spring (7), in that these tabs (7a) have a guide notch (8b) on mutually confronting edges, and in that a guide sheet (2c) engages into each of these guide notches (8b) and is arranged laterally relative to the spring (7) on the web aperture (5).

4. Grid-shaped spacer according to Claim 3, characterized in that the tab (7a) is assigned, at each spring end, on the other longitudinal edge of the spring (7), an additional tab (7b) which engages transversely through the web aperture (5) and which likewise has a guide notch (9b), into which the guide sheet (2c) engages, and in that each tab (7a) and the additional tab (7b) assigned to it are each provided with a further notch (8a) and (9a), into which the same aperture edge (10a) and (10b) opposing the elongation of the spring (7) engages.

5. Grid-shaped spacer according to Claim 4, characterized in that, at each spring end, both the tab (7a) and the associated additional tab (7b) bear against the same aperture edge (10a) and (10b) opposing the elongation of the spring (7).

6. Grid-shaped spacer according to Claims 1 and 2, characterized in that the aperture edge (10a) opposing the elongation of the spring (7) engages through the tab (13).

## Revendications

1. Elément d'entretoisement en forme de grille avec réglettes en tôle, qui constituent des mailles pour crayons combustibles d'un assemblage combustible de réacteur nucléaire, et avec un ressort très allongé situé dans une maille et bombé dans une direction perpendiculaire à son propre sens longitudinal et qui traverse transversalement, par une languette de fixation à chacune des deux extrémités de ressort, une fenêtre ménagée dans une réglette en tôle et présentant deux bords de fenêtre situés face à face et s'opposant à un allongement du ressort, caractérisé par le fait qu'au moins la languette de fixation (7a, 23), prévue à l'une des deux extrémités de ressort, est encliquetée dans une encoche (11a) pratiquée dans un bord de fenêtre (10a) s'opposant à un allongement du ressort (7).

2. Elément d'entretoisement en forme de grille selon la revendication 1,
caractérisé par le fait que le bord de fenêtre (10a) s'opposant à un allongement du ressort (7) forme un plan incliné qui va en montant vers l'encoche (11a).

3. Elément d'entretoisement en forme de grille selon l'une des revendications 1 ou 2,
caractérisé par le fait que, à chaque extrémité du ressort (7), la languette de fixation (7a) est prévue sur la même arête longitudinale du ressort à lame (7), que ces languettes de fixation (7a) présentent une encoche de guidage (8b) sur leurs bords tournés l'un vers l'autre, et
qu'une tôle de guidage (2c), disposée au niveau de la fenêtre (5) ménagée dans la réglette latéralement par rapport au ressort (7), pénètre dans chacune de ces encoches de guidage (8b).

4. Elément d'entretoisement en forme de grille selon la revendication 3,
caractérisé par le fait qu'une languette auxiliaire de fixation (7b), prévue sur l'autre arête longitudinale du ressort (7), est associée à la languette de fixation (7a) à chaque extrémité de ressort et qu'elle passe transversalement dans la fenêtre (5) ménagée dans la réglette et présente également une encoche de guidage (9b), dans laquelle pénètre la tôle de guidage (2c), et
que chaque languette de fixation (7a) et la languette auxiliaire de fixation (7b), qui lui est associée, comportent des encoches supplémentaires, respectivement (8a) et (9a), dans laquelle pénètre le même bord de fenêtre (10a) ou (10b) s'opposant à l'allongement du ressort (7).

5. Elément d'entretoisement en forme de grille selon la revendication 4,
caractérisé par le fait que, à chaque extrémité de ressort, aussi bien la languette de fixation (7a) que la languette auxiliaire de fixation (7b) associée sont appliquées au même bord de fenêtre (10a) ou (10b) s'opposant à l'allongement du ressort (7).

6. Elément d'entretoisement en forme de grille selon les revendications 1 et 2,
caractérisé par le fait que le bord de fenêtre (10a) s'opposant à l'allongement du ressort (7) passe dans la languette de fixation (13).
